# EUROPÄISCHE PATENTSCHRIFT

(11) **EP 1 183 452 B1**
(45) Veröffentlichungstag und Bekanntmachung des Hinweises auf die Patenterteilung: **25.05.2005**
(21) Anmeldenummer: 00991580.2
(22) Anmeldetag: 02.12.2000
(51) Int. Cl.: F02D 33/02

(54) **VERFAHREN ZUR REGELUNG DES LADEDRUCKS AN EINER KOLBENBRENNKRAFTMASCHINE MIT TURBOLADER**
METHOD FOR CONTROLLING THE BOOST PRESSURE ON A PISTON INTERNAL COMBUSTION ENGINE WITH A TURBOCHARGER
PROCEDE DE REGULATION DE LA PRESSION DE CHARGE SUR UN MOTEUR ALTERNATIF A COMBUSTION INTERNE A TURBOSOUFFLANTE

(30) Priorität: 14.12.1999 DE 19960166
(43) Veröffentlichungstag der Anmeldung: 06.03.2002
(73) Patentinhaber: FEV Motorentechnik GmbH, 52078 Aachen (DE)
(72) Erfinder: OSTERTAG, Friedrich, 71287 Weissach (DE)
(74) Vertreter: Langmaack, Jürgen, Dipl.-Ing.
(86) Internationale Anmeldenummer: PCT/EP2000/012144
(87) Internationale Veröffentlichungsnummer: WO 2001/044641

(56) Entgegenhaltungen:
- EP-A- 0 323 255
- EP-A- 0 374 953
- EP-A- 0 786 589
- US-A- 5 875 761

## Beschreibung

Bei Kraftfahrzeugen, insbesondere Personenkraftfahrzeugen, zeigen Kolbenbrennkraftmaschinen mit einem über ein Abblaseventil geregelten Turbolader bei bestimmten Lastzuständen ein mehr oder weniger großes "Turboloch", d. h. einen Mangel an Drehmoment. Dieser ist stationär im Bereich niedriger Drehzahlen und instationär nach einem Lastsprung. Um das instationäre Turboloch gering zu halten, muß die Ladedruckregelung so ausgelegt werden, daß bei Lastanforderung durch den Fahrer ein schnellstmöglicher Aufbau des Ladedrucks erfolgt. Der Ladedruckanstieg erfolgt aufgrund der Rückkopplung des Systems stark progressiv. Ein Anstieg des Ladedrucks erzeugt auch einen Anstieg der zum Antrieb der Ladeturbine zur Verfügung stehenden Abgasenergie. Bei Beschleunigungsvorgängen in kleinen Gängen aus niedrigen Drehzahlen heraus kann dies zu einem plötzlichen starken Anstieg des Ladedrucks und damit zu einem plötzlichen Anstieg des Drehmomentes kommen trotz momentan konstanter Pedalstellung des Fahrers. Dies wird nicht nur als unkonfortabel empfunden, sondern bei sehr leistungsstarken Fahrzeugen kann dies auch zu einer Gefährdung führen durch plötzlich starkes Beschleunigen oder Durchdrehen der Räder und einem Ausbrechen des Fahrzeugs. Durch die Vorgabe einer Grenze für den Ladedruck im Luftzufuhrtrakt und einer danach geführten Ansteuerung des Abblaseventils sind die Probleme nicht zu beheben, da nicht das hohe Motormoment an sich, sondern der für den Fahrer infolge der Verzögeerung unerwartete Anstieg desselben für den negativen Komforteindruck bzw. die Gefährdung verantwortlich ist.

Aus der EP 0 323 255 A2 geht ein Verfahren zur Regelung eines Ladedruckes an einer instationär betriebenen Kolbenbrennkraftmaschine mit Turbolader hervor. Einer Turbine des Turboladers ist ein Waste-Gate vorgeschaltet, dass ansteuerbar ist. Das Waste-Gate wird zur Volumenstromregelung des Turboladers eingesetzt. Hierzu wird ein Transient eines Ladedruckes festgestellt, woraufhin die Steuerung einer Grundform angepasst wird, wobei der Ladedruck derart erhöht wird, dass er einer vorbestimmten Steigerungsrate folgt. Ist die Steigung des Ladedruckes zu hoch, wird eine Absenkung der Steigung vorgenommen.

Der Erfindung liegt die Aufgabe zugrunde, ein Verfahren für eine Ladedruckregelung zu schaffen, die den Ladedruckaufbau komfortabler gestaltet, die gleichwohl auf plötzliche Lastanforderungen schnell reagiert.

Die Aufgabe wird mit einem Verfahren mit den Merkmalen des Anspruches 1 sowie mit einer instationär betreibbaren Kraftfahrzeug-Kolbenbrennkraftmaschine mit den Merkmalen des Anspruches 7 gelöst.

Ein erfindungsgemäßes Verfahren sieht ein Verfahren zur Regelung des Ladedrucks an einer instationär betriebenen Kraftfahrzeug-Kolbenbrennkraftmaschine vor, die einen Abgastrakt und einen Luftzufuhrtrakt aufweist und die mit einem Turbolader versehen ist, der eine mit dem Abgastrakt verbundene Ladeturbine und einen von der Ladeturbine angetriebenen Verdichter aufweist, der mit dem Luftzufuhrtrakt verbunden ist, und die eine Motorsteuerung zur Steuerung eines der Ladeturbine im Abgastrakt vorgeschalteten Abblaseventils aufweist. Bei Einleitung eines Beschleunigungsvorgangs durch ein vom Fahrer zu betätigendes Pedal zur Einstellung eines Lastwunsches von der Motorsteuerung wird die Pedalstellung und ein lastproportionaler Gradient erfasst. Beim Überschreiten eines vorgebbaren Grenzwertes für den lastproportionalen Gradienten wird das Abblaseventil in Öffnungsrichtung so angesteuert, dass ein vorgebbar geregelter Druckanstieg im Luftzufuhrtrakt erfolgt, wobei für die Grenzwertvorgabe des lastproportionalen Gradienten der Pedalgradient dϕ/dt berücksichtigt wird.

Eine erfindungsgemäße Vorrichtung sieht eine instationär betreibare Kraftfahrzeug-Kolbenbrennkraftmaschine vor, die einen Abgastrakt und einen Luftzufuhrtrakt aufweist und die mit einem Turbolader versehen ist, der eine mit dem Abgastrakt verbundene Ladeturbine und einen von der Ladeturbine angetriebenen Verdichter aufweist, der mit dem Luftzufuhrtrakt verbunden ist, und die eine Motorsteuerung zur Steuerung eines der Ladeturbine im Abgastrakt vorgeschalteten Abblaseventils sowie eine Regelung eines Ladedrucks des Turboladers aufweist. Ein Aufnehmer zum Erfassen eines lastproportionalen Pedal-Gradienten bei Einleitung eines Beschleunigungsvorgangs durch ein vom Fahrer zu betätigendes Pedal zur Einstellung eines Lastwunsches ist vorgesehen und ein Signalübertragungsweg zur Übertragung von den lastproportionalen Pedal-Gradienten charakterisierende Signale an die Motorsteuerung zur Berücksichtigung für die Regelung des Ladedrucks. Auch ist eine Vorrichtung vorgesehen, die beim Überschreiten eines vorgebbaren Grenzwertes für den lastproportionalen Pedal-Gradienten das Abblaseventil in Öffnungsrichtung so ansteuert, dass ein vorgebbar geregelter Druckanstieg im Luftzufuhrtrakt erfolgt.

Als "lastproportionaler Gradient" gilt jeder zeitabhängig zu erfassende Meßwert an der Kolbenbrennkraftmaschine, der eine Aussage über die Änderung des jeweiligen Lastzustand des Motors im weitesten Sinne ermöglicht. Zu diesen Meßwerten gehören vornehmlich die zeitliche Veränderung des Ladedrucks im Luftzufuhrtrakt, die zeitliche Änderung des Luftmassenstroms oder eines direkt oder indirekt ermittelten Motormoments. Auch ein aus Meß- und Steuergrößen in der Motorsteuerung zu bildender Modellwert für eine zeitliche Erfassung der Motorlast kann vorgegeben werden.

Zusätzlich zur Vorgabe eines durch die vorhandene Regelung anzustrebenden Absolutwertes des Meßwertes besteht eine Maßnahme darin, den Gradienten dieses lastproportionalen Meßwertes, d.h. seine Veränderung pro Zeiteinheit zu erfassen, und für diesen lastproportionalen Gradienten einen Grenzwert vorzugeben. Wird der Grenzwert überschritten, führt die Regelung durch Verstellen des Abblaseventils in Richtung "offen" sowie je nach der Auslegung des Gesamtsystems ergänzend durch reduzierenden Eingriff in die Laststeuerung des Motors den erfaßten lastproportionalen Gradienten auf den vorgegebenen Grenzwert zurück. Der Eingriff in die Laststeuerung kann beispielsweise durch eine Verstellung der Drosselklappe, aber auch durch unkonventionelle Methoden wie variable Ventilsteuerzeiten oder Gemischsteuerung erfolgen.

Hierdurch wird erreicht, daß der Fahrer. auf das starke Ansteigen des Ladedrucks, der ein Ansteigen des vom Motor abgegebenen Drehmomentes zur Folge hat, angemessen reagieren kann. Es wird vermieden, daß der Fahrer durch ein übermäßig schnelles Ansteigen des Ladedrucks so überrascht wird, daß noch innerhalb seiner Reaktionszeit ein ungewollt hoher Druck im Luftzufuhrtrakt erreicht wird, und damit eine vom Fahrer nicht erwünschte bzw. nicht erwartete Leistungsabgabe, mit in Folge beispielsweise durchdrehenden Antriebsrädern oder vorwärtschießendem Fahrzeug erfolgt. Der Fahrer erhält die Möglichkeit, auf das ansteigende Motormoment mit einer Reduzierung seiner Pedalvorgabe oder auch fahrdynamischen Eingriffen (Gegenlenken) zu reagieren.

Da beispielsweise bei einem Kraftfahrzeugmotor einmal durch den instationären Betrieb und zum anderen durch das Vorhandensein des Schaltgetriebes die Betriebsbedingungen der Kolbenbrennkraftmaschine und des Turboladers sich nach bestimmten Gesetzmäßigkeiten ändern, ist in vorteilhafter Ausgestaltung der Erfindung vorgesehen, daß die jeweils vorgebbaren Grenzwerte für den lastproportionalen Gradienten einem Kennfeld der Motorsteuerung entnommen werden. Wird beispielsweise für einen Beschleunigungsvorgang das Pedal in einem kleinen Gang bei niedrigen Drehzahlen voll durchgetreten, dann ergeben sich für das Verhalten des Turboladers, und damit für die Veränderung des Drehmomentes der Kolbenbrennkraftmaschine, aber auch für den Einfluß dieser Veränderung auf das Komfortempfinden des Fahrers andere Werte, als wenn dieser Vorgang bei höherer Drehzahl in einem anderen Gang erfolgt. Diese Unterschiede werden durch die Vorgabe von entsprechenden Kennfeldern in der Motorsteuerung berücksichtigt.

Erfindungsgemäß ist vorgesehen, daß für die Grenzwertvorgabe des lastproportionalen Gradienten der Pedalgradient berücksichtigt wird. Der Begriff "Pedalgradient" im Sinne der Erfindung bedeutet die Veränderung der Pedalstellung in Abhängigkeit von der Zeit. Wird also vom Fahrer das Pedal zur Erhöhung der Fahrzeuggeschwindigkeit nur langsam durchgetreten, oder in einer konstanten Stellung gehalten, dann erwartet der Fahrer auch nur eine langsame Veränderung des Motormonents, der Grenzwert für den lastproportionalen Gradienten muß klein gewählt werden. Wird das Pedal schnell durchgetreten, dann erwartet der Fahrer auch eine entsprechend schnelle Veränderung des Motormonents. Ein großer lastproportionaler Gradient kann ohne Komfort- oder Sicherheitseinbußen zugelassen werden.

In weiterer vorteilhafter Ausgestaltung der Erfindung ist vorgesehen, daß der jeweilige Grenzwert dem Kennfeld über den in negative Richtung tiefpaßgefilterten Pedalgradient entnommen wird. Durch die Verknüpfung werden in vorteilhafter Weise die Erwartungen des Fahrers berücksichtigt. Bei konstantem Pedalwert, d. h. Pedalgradient gleich Null, erwartet der Fahrer, auch wenn der Pedalwert selbst groß ist, üblicherweise nur eine mäßige Veränderung des Drehmomentes. Bei schnellem Durchtreten des Pedals dagegen, erwartet der Fahrer einen schnellen Anstieg des Drehmomentes entsprechend der Geschwindigkeit der Pedalbewegung jedoch zunehmend weniger, je länger die Pedalbewegung zum Beschleunigen zurückliegt. Durch den Tiefpaßfilter für das Signal "Pedalgradient" wird mit zunehmendem Zeitablauf zwischen Signal und Ansprechen des Turboladers von der Motorsteuerung nur noch ein geringerer Anstieg des Drucks im Luftzufuhrtrakt zugelassen, als an sich möglich wäre. Hierdurch wird vermieden, daß der Fahrer durch einen unerwarteten plötzlichen Anstieg des Drehmomentes überrascht wird. Dieser Wert kann dann noch zusätzlich abhängig von weiteren Eingangsgrößen modifiziert werden.

In vorteilhafter Ausgestaltung der Erfindung ist vorgesehen, daß als lastproportionaler Gradient der Ladedruckgradient im Luftzufuhrtrakt erfaßt wird. Der Luftmassenstrom im Luftzufuhrtrakt ist proportional zum Druck im Luftzufuhrtrakt und auch proportional zu Last. Damit stellt der Ladedruckgradient einen lastproportionalen Gradienten dar, der in direktem Zusammenhang mit den jeweiligen Regel- und Steuereingriffen steht. Wird über die Pedalstellung vom Fahrer eine starke Beschleunigung gefordert, dann reagiert die Kolbenbrennkraftmaschine infolge der erhöhten Kraftstoffzufuhr mit einer Erhöhung der Abgasenergie, die über die Laderturbine und den Lader zur Erhöhung des Ladedrucks führt. Durch die Erfassung des Ladedruckgradienten kann der zeitliche Verlauf des Ladedruckanstiegs erfaßt werden und bei einem unerwüschnt steilen Anstieg praktisch extrapolierend eine Verstellung des Abblaseventils in Öffnungsrichtung vorgenommen werden, so daß der Anstieg weniger steil erfolgt. Aufgrund des Regelverhaltens des gesamten Systems Kolbenbrennkraftmaschine-Turbolader kann dann für den jeweiligen Last- und Betriebszustand in der Motorsteuerung ein entsprechendes Kennfeld vorgesehen werden, so daß bei Erreichen des durch das Kennfeld jeweils vorgegebenen Grenzwertes für den Ladedruckgradienten das Abblaseventil entsprechend geöffnet und die Energiezufuhr zur Laderturbine reduziert werden kann. Damit ist es möglich, den Anstieg des Ladedrucks im Luftzufuhrtrakt feinfühlig zu führen. In Fahrsituationen, in denen anhand der Pedalbewegung davon auszugehen ist, daß der Fahrer dies wünscht und erwartet, kann die physikalisch mölgliche instationäre Leistung des Systems abgefordert werden. In Situationen, in denen anzunehmen ist, daß der Fahrer nicht mmit erheblichen Drehmomentveränderungen rechnet, kann die Dynamik des Systems auf ein komfortables und sicheres Maß gedämpft werden.

Während das erfindungsgemäße Verfahren und die vorstehend erörterten Ausgestaltungen grundsätzlich sowohl für Kolbenbrennkraftmaschinen mit drosselfreier Laststeuerung, als auch mit einer über eine Drosselklappe im Luftzufuhrtrakt bewirkten Laststeuerung anwendbar ist, ist in weiterer Ausgestaltung der Anwendung des Verfahrens bei einer über eine Drosselklappe wirkenden Steuerung vorgesehen, daß die jeweilige Drosselklappenstellung erfaßt und bei Überschreiten des vorgegebenen Wertes für den Ladedruckgradienten die Drosselklappe zumindest zeitweise in Schließrichtung verstellt wird. Durch diesen Regeleingriff ist es möglich, einen Ladedruckanstieg, der aufgrund der langen Totzeiten des Systems "Abblaseventil-Turbolader" mit einer Verstellung des Abblaseventils nicht verhindert werden kann, im Ansaugtrakt abzufangen, und damit einen unerwünscht steilen Anstieg der Motorlast dennoch zu vermeiden und so die Ansprechzeit des Systems deitlich zu verkürzen. Ein unerwünscht schneller Anstieg des Ladedrucks wird schon im Luftzufuhrtrakt "abgefangen", und so auch bei einer gewünschten starken Beschleunigung ein plötzlicher starken Anstieg des Ladedrucks vermieden. Entsprechend wird bei einer Kolbenbrennkraftmaschine mit drosselfreier Laststeuerung, beispielsweise über variabel ansteuerbare Gaswechselventile, der unerwünschte Ladedruckanstieg durch Veränderung der Ventilsteuerzeiten über die Motorsteuerung "abgefangen".

Die Erfindung wird anhand schematischer Zeichnungen nnäher erläutert. Es zeigen:
- Fig. 1: ein Blockschaltbild einer Kolbenbrennkraftmaschine mit Turboladerregelung,
- Fig. 2: die verfahrensmäßige Verknüpfung eines paßtiefgefilterten Pedalgradienten mit Ladedruckgradienten.

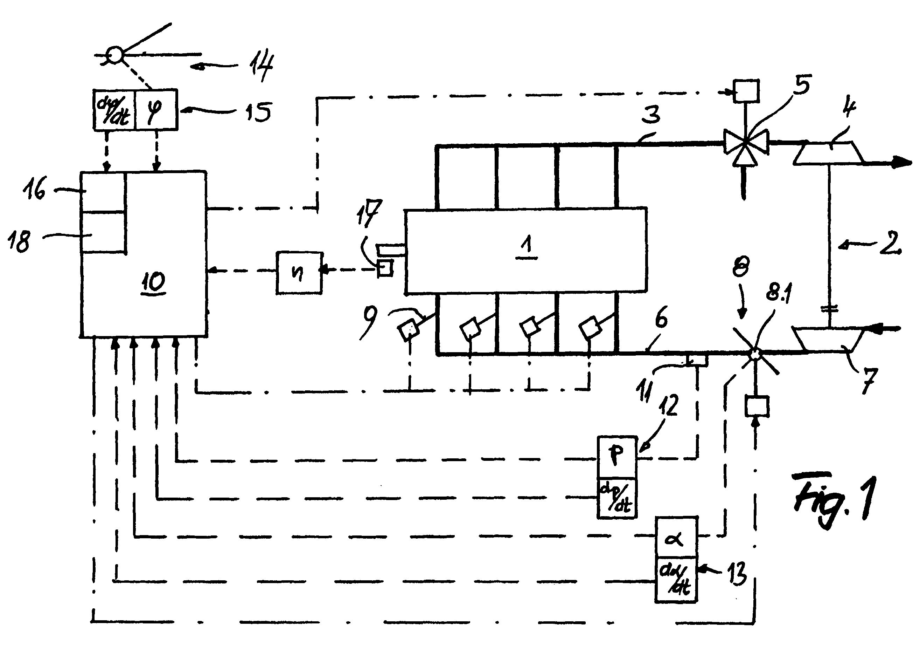

Fig. 1 zeigt in Form eines Blockschaltbildes eine Kolbenbrennkraftmaschine 1 mit zugeordnetem Turbolader 2 zur Erhöhung des Ladedrucks der Verbrennungsluft steht über ihren Abgastrakt 3 mit der Laderturbine 4 des Turboladers 2 in Verbindung. Im Abgastrakt 3 ist vor der Laderturbine 4 ein steuerbares Abblaseventil 5 angeordnet.

Die Kolbenbrennkraftmaschine 1 steht ferner mit ihrem Luftzufuhrtrakt 6 mit dem Verdichter 7 des Turboladers 2 in Verbindung. Bei dem hier dargestellten Ausführungsbeispiel handelt es sich um eine drosselgesteuerte Kolbenbrennkraftmaschine, bei der im Luftzufuhrtrakt 6 auf der Druckseite des Laders 7 eine steuerbare Drosselklappe 8 angeordnet ist. Die Kraftstoffzufuhr erfolgt, wie hier schematisch angedeutet, beispielsweise über steuerbare Einspritzdüsen 9, über die Kraftstoff in die einzelnen zu den Zylindern führenden Lufteinlaßkanäle eingespritzt wird. Das nachstehend näher beschriebene Verfahren ist für alle Formen der Kraftstoffzufuhr anwendbar, so auch für die Kraftstoffdirekteinspritzung.

Der Kolbenbrennkraftmaschine 1 ist eine Motorsteuerung 10 zugeordnet, der alle für den Motorbetrieb relevanten Meßwertezugeführt werden und von der alle für den Motorbetrieb erforderlichen Signale nach entsprechender Verarbeitung abgegeben werden. Bei der nachfolgenden Darstellung der Funktionsweise der Kolbenbrennkraftmaschine mit ihrer Steuerung sind jedoch diejenigen Steuer- und Regeleingriffe als bekannt vorausgesetzt und daher nicht beschrieben, die für den Normalbetrieb der Kolbenbrennkraftmaschine notwendig sind. Nachstehend sind lediglich die Steuer- und Regelzusammenhänge beschrieben, die zur Durchführung des erfindungsgemäßen Verfahrens zur Ladedruckregelung erforderlich sind.

Im Blockschaltbild sind alle die an sich der Motorsteuerung 10 zuzuordnenden Elemente zur Erfassung und Umsetzung der zur Durchführung des Verfahrens notwendigen Meßwerte gesondert dargestellt.

Bei dem hier dargestellten Ausführungsbeispiel wird als lastproportionaler Gradient der Ladedruckgradient erfaßt. Hierzu ist im Luftzufuhrtrakt 6 ein Druckgeber 11 angeordnet, dessen Meßwert in einer Recheneinheit 12 sowohl als Absolutwert als auch nach Differentiation als Ladedruckgradient dp/dt erfaßt wird, wobei beide Werte gesondert der Motorsteuerung 10 zur Verfügung stehen.

Die Drosselklappe 8 mit ihrem zugehörigen Stellantrieb weist ferner einen Geber 8.1 auf, über den die jeweilige Drosselklappenstellung α erfaßt werden kann. In gleicher Weise wie bei der Ladedruckerfassung wird über eine entsprechende Recheneinheit 13 zum einen der Absolutwert der jeweiligen Drosselklappenstellung ermitttelt und durch Differentation auch der Drosselklappengradient dα/dt ermittelt. Auch diese beiden Werte stehen der Motorsteuerung als gesonderte Werte zur Verfügung.

Der Lastwunsch wird der Motorsteuerung über ein Pedal 14 zugeführt, das über eine entsprechende Einheit 15 zum einen die tatsächliche Pedalstellung ϕ und zum anderen auch die zeitliche Veränderung der Pedalstellung, d. h. den Pedalgradienten dϕ/dt als Eingangsgröße zur Motorsteuerung abgibt. Der Wert des Pedalgradienten wird noch über einen der Motorsteuerung 10 zugeordneten Tiefpaß 16 berücksichtigt.

Bei dem hier dargestellten Ausführungsbeispiel wird die Kurbelwellendrehzahl der Kolbenbrennkraftmaschine 1 in üblicherweise über einen Geber 17 erfaßt und der Motorsteuerung 10 zur Verfügung gestellt.

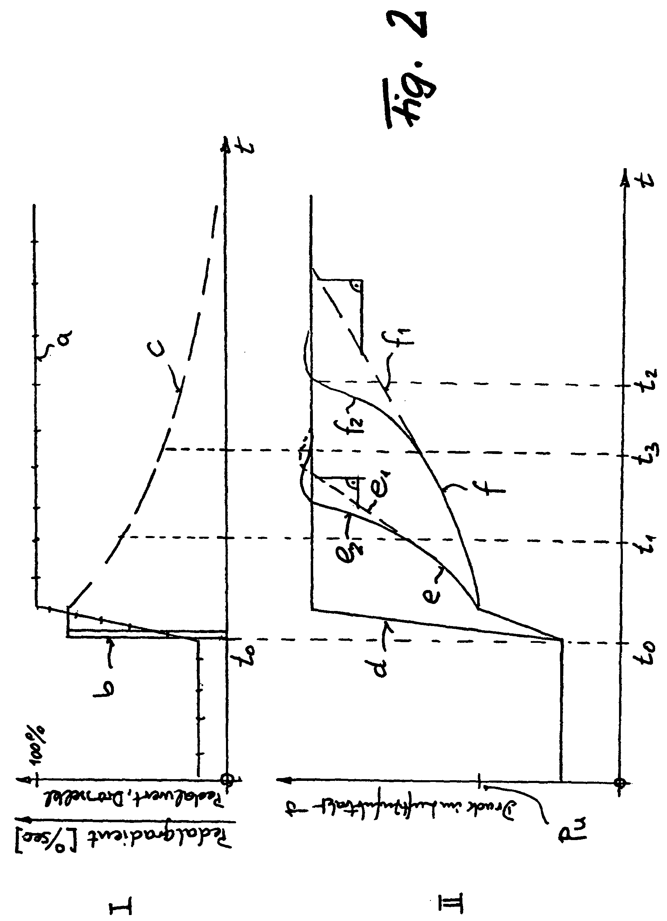

Wird nun, wie anhand von Fig. 1 erläutert, beispielsweise in einem niedrigen Gang das Pedal 14 stark durchgedrückt, so werden über die Motorsteuerung 10 die Sollwerte für Ladedruck und Kraftstoffeinspritzung auf "Volllast" verstellt und so zum einen die Drosselklappe 8 entsprechend voll geöffnet und die Kraftstoffeinspritzmenge erhöht. Damit steht mit der eingangs erläuterten Verzögerung an der Laderturbine 4 aus dem Abgastrakt 3 eine erhöhte Energiemenge zur Verfügung, die, wie an sich gewünscht, zu einer Erhöhung des Ladedrucks im Zufuhrtrakt führt. Da jedoch bei entsprechendem Lastbefehl durch das Pedal 14, beispielsweise mit schneller Pedalbewegung, die Abgasenergie und damit auch der Ladedruck im Luftzufuhrtrakt 6 schneller ansteigt als dies für den Betrieb der Kolbenbrennkraftmaschine und des damit verbundenen Fahrzeugs zuträglich ist, wird über den Druckgeber 11 der Druck, insbesondere aber der Ladedruckgradient dp/dt erfaßt. Dieser Wert wird in der Motorsteuerung 10 nach Abgleich mit in einem Kennfeld 18 für den Grenzwert des Ladedruckgradienten abgelegten Wert als Stellsignal umgesetzt. Ergibt sich hierbei, daß der aktuelle Ladedruckgradient einen für den betreffenden Betriebszustand aus dem Kennfeld entnommenen Grenzwert erreicht hat, wird über die Motorsteuerung das Abblaseventil 5 geöffnet und ggf. die Drosselklappe 8 zumindest kurzzeitig und um ein geringes Maß in Schließrichtung zurückgestellt und so ein übermäßiger Ladedruckanstieg "abgefangen". Somit wird einerseits das "Abgasenergieangebot" für die Laderturbine zurückgenommen und, sofern notwendig, darüber hinaus das "Luftangebot" für die Kolbenbrennkraftmaschine über die Drosselung des Luftstroms weiter reduziert, so daß sich ein geführter Anstieg des Ladedrucks ergibt, wie anhand von Fig. 2, Diagramm II, Kurven e₁ und f₁ noch näher erläutert wird..

Hierbei wird dann entsprechend den Vorgaben des Kennfeldes 18 das Abblaseventil 5 wieder in seine von der Motorsteuerung vorgegebene, dem Pedalwert zugeordnete Stellung zurückgeführt um den gewollten stationären Enddruck zu bewirken.

Bei einer drosselfrei gesteuerten Kolbenbrennkraftmaschine entfällt die im Blockschaltbild dargestellte Drosselklappe 8 mit ihrer Ansteuerung, da die Gaswechselventile über voll variabel steuerbare Ventiltriebe, beispielsweise elektromagnetische Aktuatoren betätigt werden, die über die Motorsteuerung 10 direkt angesteuert werden. Durch Beeinflussung der Öffnungszeitpunkte, aber auch der Öffnungsdauer der Gaswechselventile kann in gleicher Weise wie über eine Drosselklappe die Last der Kolbenbrennkraftmaschine gesteuert werden.

Auch hierbei ergibt sich beispielsweise bei einer schnellen Betätigung des Pedals 14 im niedrigen Gang bei geringer Geschwindigkeit der vorbeschriebene Effekt, daß der Turbolader verzögert "anspringt" und dann den Ladedruck im Luftzufuhrtrakt 2 progressiv ansteigend erhöht. Durch diesen Druckanstieg im Luftzufuhrtrakt ergibt sich eine entsprechend höhere Zylinderfüllung bei sonst gleichbleibender Ansteuerung des Ventilspiels der Gaswechselventile, so daß auch bei einer drosselfrei gesteuerten Kolbenbrennkraftmaschine die eingangs beschriebene Gefährdung durch ein plötzliches Ansteigen des Drehmomentes auftreten kann.

Durch die Erfassung des Ladedruckgradienten über den Druckgeber 11 in dem Luftzufuhrtrakt 6, kann auch bei einer drosselfrei gesteuerten Kolbenbrennkraftmaschine neben der Ansteuerung des Abblaseventils 5 durch Veränderung der Ventilsteuerzeiten der Gaseinlaßventile auf den starken Anstieg des Ladedrucks im Luftzufuhrtrakt zusätzlich reagiert werden, so daß auch hier der Ladedruck nur nach den Vorgaben des Kennfeldes ohne Grenzwertüberschreitung erhöht wird.

In Fig. 2 ist die bevorzugte Ausgestaltung des Verfahrens für zwei unterschiedliche Lastzustände in ihrer verfahrensmäßigen Verknüpfung der Erfassung eines tiefpaßgefilterten Pedalgradienten mit der Erfassung des jeweils zugehörigen Ladedruckgradienten dargestellt. In Fig. 2 zeigt das Diagramm I in der Kurve a in Prozent den Verlauf des Pedalwertes und identisch den Wert der damit verbundenen Drosselklappenstellung. Vom Fahrer wird für einen Beschleunigungsvorgang zum Zeitpunkt t₀ innerhalb kurzer Zeit das Pedal 14 voll durchgedrückt, so daß das Pedal 14 auf Vollgasstellung gehalten ist.

Die Kurve b zeigt den zugehörigen Pedalgradienten. Da der Pedalwinkel von der Pedalausgangsstellung bei t₀ bis zur Endstellung zur Zeit t₁ in sehr kurzer zeit durchlaufen wird, ergibt sich für den Pedalgradienten, wie in der Kurve b dargestellt, ein steiler Anstieg, der mit Erreichen der Pedalendstellung und damit dem Ende der Pedalbewegung sofort auf "Null" wieder abfällt. Über die Motorsteuerung 10 wird dieser Pedalgradient erfaßt, wie nächstehend noch näher beschrieben werden wird, als Meßwert festgehalten. Dieser Meßwert steht an der Motorsteuerung als tiefpaßgefiltertes Signal an, wie in der Kurve c dargestellt, so daß, ausgehend vom ursprünglich großen Pedalgradienten der Wert mit zunehmender Zeit abnimmt und damit eine Veränderung des vorgegebenen Grenzwerts für den lastproportionalen Gradienten möglich ist.

In dem zugeordneten Diagramm II ist der Verlauf des Drucks im Luftzufuhrtrakt 6 über der Zeit dargestellt. Wird zum Zeitpunkt t₀ das Pedal entsprechend der Kurve a im Diagramm I schnell in Volllaststellung bewegt, wird der Motorsteuerung für den Ladedruck im Luftzufuhrtrakt entsprechend der Kurve d der Sollwert für den Volllastbetrieb vorgegeben. Da bei einem Turbolader mit Erhöhung der Drehzahl für den Lader, anders als bei einem mechanischen Lader, der Druckanstieg zunächst gering, dann aber stark progressiv verläuft, ergeben sich je nach dem Lastfall entsprechende Druckanstiege.

Bis zum Erreichen des Umgebungsdrucks pᵤ steigt der Druck zunächst linear an. Danach ergibt sich ein weiterer Anstieg des Drucks im Ansaugtrakt durch den Hochlauf des Turboladers. In einen ersten Lastfall erfolgt dieser zügig, so daß der Ladedruck schnell weiter ansteigt, bei konventioneller Regelung gemäß dem Kurvenast e₂ mit sehr steilem Verlauf im letzten Teil vor Erreichen des Solldrucks. In einem zweiten Lastfall ist ein stark verzögertes Ansprechen des Turboladers dargestellt. Hierbei erfolgt der weitere Druckanstieg verzögert, ohne Eingriff gemäß dem geschilderten Verfahren jedoch dann aufgrund der Rückkoppelung des Systems ebenfalls sehr steil entsprechend Kurve f₂.

Dieser Anstieg in Abhängigkeit von der Zeit kann als Gradient erfaßt werden.

Über ein in der Motorsteuerung abgelegtes Kennfeld wird, wie verstehend beschrieben, ein maximal zulässiger Ladedruckgradient vergegeben, der durch die Steigung der gestrichelten Kurvenäste e₁ und f₁ wiedergegeben ist. Erreicht die Steigung der Kurve e bzw. f) den Grenzwert, dargestellt zum Zeitpunkt t₁ bzw. t₃, dann wird gemäß dem geschilderten Verfahren durch entsprechende Ansteuerung des Abblaseventils und der Drosselklappe dem Ladedruckaufbau genau soweit entgegengewirkt, daß sich ein geführter Ladedruckverlauf entsprechend dem Kurvenast e₁ bzw. f₁ ergibt.

Durch die Veränderung des vorgegebenen Grenzwerts für den Ladedruckgradienten. bzw. allgemein den lastproportionalen Gradienten, mit dem abnehmbaren Wert des gefilterten Pedalgradienten ist es möglich, für den Lastfall "e" einen anderen Grenzwert, als für den Lastfall "f" zu wählen. Im Fall "e" ist nur eine geringe Dämpfung der Dynamik erforderlich, da der Fahrer aufgrund des nur kurz zurückliegenden Durchtretens des Pedals zum Zeitpunkt t₁ noch mit einen Ansteigen des Drehmoments rechnet, dieses ja gerade über das Pedal vom Motor fordert. Im Fall "f" fordert der Fahrer ebenfalls das Volllast-Drehmoment, der Motor ist aber aufgrund der Trägheit des physikalischen Systems bis zum Zeitpunkt t₃ nicht in der Lage, diese Forderung zu erfüllen. Durch die Beeinflussung den Abblaseventils und der Drosselklappe wird verhindert, daß der Fahrer zum Zeitpunkt t₃ mit Einen dann schon nicht mehr in dieser Hohe erwarteten Drehmomentanstieg überrascht wird

## Patentansprüche

1. Verfahren zur Regelung des Ladedrucks an einer instationär betriebenen Kraftfahrzeug-Kolbenbrennkraftmaschine (1), die einen Abgastrakt (3) und einen Luftzufuhrtrakt (6) aufweist und die mit einem Turbolader (2) versehen ist, der eine mit dem Abgastrakt (3) verbundene Ladeturbine (4) und einen von der Ladeturbine (4) angetriebenen Verdichter (7) aufweist, der mit dem Luftzufuhrtrakt (6) verbunden ist, und die eine Motorsteuerung (10) zur Steuerung eines der Ladeturbine (4) im Abgastrakt (3) vorgeschalteten Abblaseventils (5) aufweist, daß bei Einleitung eines Beschleunigungsvorgangs durch ein vom Fahrer zu betätigendes Pedal (14) zur Einstellung eines Lastwunsches von der Motorsteuerung (10) die Pedalstellung und ein lastproportionaler Gradient erfasst wird, und daß beim Überschreiten eines vorgebbaren Grenzwertes für den lastproportionalen Gradienten das Abblaseventil (5) in Öffnungsrichtung so angesteuert wird, daß ein vorgebbar geregelter Druckanstieg im Luftzufuhrtrakt (6) erfolgt, **dadurch gekennzeichnet, dass** für die Grenzwertvorgabe des lastproportionalen Gradienten der Pedalgradient dϕ/dt berücksichtigt wird.

2. Verfahren nach Anspruch 1, **dadurch gekennzeichnet, daß** der jeweils vorgebbare Grenzwert für den lastproportionalen Gradienten einem Kennfeld der Motorsteuerung (10) entnommen wird.

3. Verfahren nach einem der Ansprüche 1 bis 2, **dadurch gekennzeichnet, daß** der jeweilige Grenzwert des lastproportionalen Gradienten dem Kennfeld über den in negativer Richtung tiefpaßgefilterten Pedalgradienten dϕ/dt entnommen wird.

4. Verfahren nach einem der Ansprüche 1 bis 3, **dadurch gekennzeichnet, daß** als lastproportionaler Gradient der Ladedruckgradient dp/dt im Luftzufuhrtrakt erfaßt wird.

5. Verfahren an einer Kolbenbrennkraftmaschine mit einer über eine Drosselklappe im Luftzufuhrtrakt bewirkten Laststeuerung, nach einem der Ansprüche 1 bis 4, **dadurch gekennzeichnet, daß** die jeweilige Drosselklappenstellung (α) erfaßt und bei Überschreiten des vorgegebenen Wertes für den Ladedruckgradienten dp/dt die Drosselklappe zumindest zeitweise in Schließrichtung verstellt wird.

6. Verfahren an einer Kolbenbrennkraftmaschine mit einer über variabel ansteuerbare Gaswechselventile bewirkten Laststeuerung, nach einem der Ansprüche 1 bis 4, **dadurch gekennzeichnet, daß** bei Überschreiten des vorgegebenen Wertes für den lastproportionalen Gradienten die Ventilsteuerzeiten zumindest teilweise auf verminderte Last zurückgestellt werden.

7. Instationär betreibare Kraftfahrzeug-Kolbenbrennkraftmaschine (1), die einen Abgastrakt (3) und einen Luftzufuhrtrakt (6) aufweist und die mit einem Turbolader (2) versehen ist, der eine mit dem Abgastrakt (3) verbundene Ladeturbine (4) und einen von der Ladeturbine (4) angetriebenen Verdichter (7) aufweist, der mit dem Luftzufuhrtrakt (6) verbunden ist, und die eine Motorsteuerung (10) zur Steuerung eines der Ladeturbine (4) im Abgastrakt (3) vorgeschalteten Abblaseventils (5) sowie eine Regelung eines Ladedrucks des Turboladers (2) aufweist, **dadurch gekennzeichnet, daß** ein Aufnehmer zum Erfassen eines lastproportionalen Pedal-Gradienten bei Einleitung eines Beschleunigungsvorgangs durch ein vom Fahrer zu betätigendes Pedal (14) zur Einstellung eines Lastwunsches vorgesehen ist, und ein Signalübertragungsweg zur Übertragung von den lastproportionalen Pedal-Gradienten charakterisierende Signale an die Motorsteuerung (10) zur Berücksichtigung für die Regelung des Ladedrucks, und mit einer Vorrichtung, die beim Überschreiten eines vorgebbaren Grenzwertes für den lastproportionalen Pedal-Gradienten das Abblaseventil (5) in Öffnungsrichtung so ansteuert, daß ein vorgebbar geregelter Druckanstieg im Luftzufuhrtrakt (6) erfolgt.

## Claims

1. Method for regulating the boost pressure in a motor vehicle reciprocating piston internal combustion engine (1) which is operated in an unsteady manner, comprises an exhaust gas duct (3) and an air supply duct (6) and is provided with a turbocharger (2) which comprises a charging turbine (4), connected to the exhaust gas duct (3), and a compressor (7) which is driven by the charging turbine (4) and is connected to the air supply duct (6), which engine also comprises an engine management unit (10) for controlling a blow-off valve (5) which is connected upstream of the charging turbine (4) in the exhaust gas duct (3), that, upon initiating an acceleration process by means of a pedal (14) to be operated by the driver, the pedal position and a load-proportional gradient is detected by the engine management unit (10) to set a load requirement, and that, upon exceeding a predeterminable limit value for the load-proportional gradient, the blow-off valve (5) is activated in the opening direction so as to produce a pressure increase, regulated in a predeterminable manner, in the air supply duct (6), **characterised in that** the pedal gradient d_/dt is taken into account for predetermining the limit value of the load-proportional gradient.

2. Method according to Claim 1, **characterised in that** the respective predeterminable limit value for the load-proportional gradient is taken from a family of characteristics of the engine management unit (10).

3. Method according to any one of Claims 1 to 2, **characterised in that** the respective limit value of the load-proportional gradient is taken from the family of characteristics via the pedal gradient d_/dt low-pass filtered in the negative direction.

4. Method according to any one of Claims 1 to 3, **characterised in that** the boost pressure gradient d_/dt in the air supply duct is detected as the load-proportional gradient.

5. Method in a reciprocating piston internal combustion engine with load control which is implemented via a throttle valve in the air supply duct according to any one of Claims 1 to 4, **characterised in that** the respective throttle valve position (α) is detected and, upon exceeding the predetermined value for the boost pressure gradient dp/dt, the throttle valve is shifted at least temporarily in the closing direction.

6. Method in a reciprocating piston internal combustion engine with load control which is implemented via gas exchange valves which can be activated in a variable manner according to any one of Claims 1 to 4, **characterised in that**, upon exceeding the predetermined value for the load-proportional gradient, the valve timing is set back at least partly to reduced load.

7. Motor vehicle reciprocating piston internal combustion engine (1) which can be operated in an unsteady manner, comprises an exhaust gas duct (3) and an air supply duct (6) and is provided with a turbocharger (2) which comprises a charging turbine (4), connected to the exhaust gas duct (3), and a compressor (7) which is driven by the charging turbine (4) and is connected to the air supply duct (6), which engine also comprises an engine management unit (10) for controlling a blow-off valve (5) which is connected upstream of the charging turbine (4) in the exhaust gas duct (3), as well as a regulating system for the boost pressure of the turbocharger (2), **characterised in that** a sensor is provided for detecting a load-proportional pedal gradient upon initiating an acceleration process by means of a pedal (14) to be operated by the driver to set a load requirement, and a signal transmission path for transmitting signals characterising the load-proportional pressure gradient to the engine management unit (10) to be taken into account for the regulation of the boost pressure, and with a device which, upon exceeding a predeterminable limit value for the load-proportional pedal gradient, activates the blow-off valve (5) in the opening direction so as to produce a pressure increase, regulated in a predeterminable manner, in the air supply duct (6).

## Revendications

1. Procédé de régulation de la pression d'admission sur un moteur alternatif à combustion interne (1) en marche non stationnaire pour un véhicule automobile, qui comporte une colonne de gaz d'échappement (3) et une colonne d'arrivée d'air (6) et qui est pourvu d'une turbosoufflante (2), qui présente une turbine de suralimentation (4) raccordée à la colonne de gaz d'échappement (3) et un compresseur (7) entraîné par la turbine de suralimentation (4), qui est raccordé à la colonne d'arrivée d'air (6), et qui comprend une commande de moteur (10) pour commander une soupape d'évacuation (5) installée avant la turbine de suralimentation (4) dans la colonne de gaz d'échappement (3), dans lequel, lors de l'introduction d'une action d'accélération par une pédale (14) à actionner par le conducteur pour régler une charge désirée, on détecte par la commande de moteur (10) la position de la pédale et un gradient proportionnel à la charge, et dans lequel, en cas de dépassement d'une valeur limite prédéterminable pour le gradient proportionnel à la charge, on commande la soupape d'évacuation (5) dans le sens de l'ouverture de telle façon qu'il se produise une augmentation de la pression régulée de façon prédéterminable dans la colonne d'arrivée d'air (6), **caractérisé en ce que** l'on tient compte du gradient de pédale dϕ/dt pour la prédétermination de la valeur limite du gradient proportionnel à la charge.

2. Procédé selon la revendication 1, **caractérisé en ce que** chaque valeur limite prédéterminable pour le gradient proportionnel à la charge est tirée d'un diagramme caractéristique de la commande de moteur (10).

3. Procédé selon l'une quelconque des revendications 1 à 2, **caractérisé en ce que** chaque valeur limite du gradient proportionnel à la charge est tirée du diagramme caractéristique relatif au gradient de pédale dϕ/dt filtré par filtre passe-bas en direction négative.

4. Procédé selon l'une quelconque des revendications 1 à 3, **caractérisé en ce que** l'on détecte comme gradient proportionnel à la charge le gradient de la pression d'admission dp/dt dans la colonne d'arrivée d'air.

5. Procédé destiné à un moteur alternatif à combustion interne avec une commande de charge assurée par un clapet d'étranglement dans la colonne d'arrivée d'air, selon l'une quelconque des revendications 1 à 4, **caractérisé en ce que** l'on détecte chaque position (α) du clapet d'étranglement et, en cas de dépassement de la valeur prédéterminée pour le gradient de pression d'alimentation dp/dt, on déplace le clapet d'étranglement au moins temporairement dans le sens de la fermeture.

6. Procédé destiné à un moteur alternatif à combustion interne avec une commande de charge assurée par des soupapes à gaz alternatives à commande variable, selon l'une quelconque des revendications 1 à 4, **caractérisé en ce que**, en cas de dépassement de la valeur prédéterminée pour le gradient proportionnel à la charge, on ramène les temps de commande de soupape au moins partiellement à une charge réduite.

7. Moteur alternatif à combustion interne (1) en marche non stationnaire pour des véhicules automobiles, qui comporte une colonne de gaz d'échappement (3) et une colonne d'arrivée d'air (6) et qui est pourvu d'une turbosoufflante (2), qui présente une turbine de suralimentation (4) raccordée à la colonne de gaz d'échappement (3) et un compresseur (7) entraîné par la turbine de suralimentation (4), qui est raccordé à la colonne d'arrivée d'air (6), et qui comprend une commande de moteur (10) pour commander une soupape d'évacuation (5) installée avant la turbine de suralimentation (4) dans la colonne de gaz d'échappement (3), ainsi qu'une régulation d'une pression d'admission de la turbosoufflante (2), **caractérisé en ce qu'**on prévoit un capteur pour détecter un gradient de pédale proportionnel à la charge lors de l'introduction d'une action d'accélération par une pédale (14) à actionner par le conducteur pour régler une charge désirée, et un chemin de transmission de signaux pour la transmission de signaux caractérisant le gradient de pédale proportionnel à la charge à la commande de moteur (10) afin d'en tenir compte pour la régulation de la pression d'admission, et avec un dispositif qui, en cas de dépassement d'une valeur limite prédéterminable pour le gradient de pédale proportionnel à la charge, commande la soupape d'évacuation (5) dans le sens de l'ouverture de telle façon qu'il se produise une augmentation de la pression régulée de façon prédéterminable dans la colonne d'arrivée d'air (6).
